Europäisches Patentamt

European Patent Office

Office européen des brevets

(11) Veröffentlichungsnummer: **0 111 260**
**B1**

(12) # EUROPÄISCHE PATENTSCHRIFT

(45) Veröffentlichungstag der Patentschrift:
**23.04.86**

(21) Anmeldenummer: **83112080.3**

(22) Anmeldetag: **01.12.83**

(51) Int. Cl.⁴: **C 08 L  69/00,** C 08 L  51/00 //
(C08L69/00, 51:00),(C08L51/00,
69:00)

(54) **Thermoplastische Formmassen.**

(30) Priorität: **08.12.82  DE 3245292**

(43) Veröffentlichungstag der Anmeldung:
**20.06.84 Patentblatt 84/25**

(45) Bekanntmachung des Hinweises auf die Patenterteilung:
**23.04.86 Patentblatt 86/17**

(84) Benannte Vertragsstaaten:
**BE DE FR GB IT NL**

(56) Entgegenhaltungen:
**EP - A - 0 036 127**
**EP - A - 0 051 336**
**EP - A - 0 064 692**
**DE - A - 2 037 419**

(73) Patentinhaber: **BASF Aktiengesellschaft,**
**Carl-Bosch-Strasse 38, D-6700 Ludwigshafen (DE)**

(72) Erfinder: **Mitulla, Konrad, Dr., An der Froschlache 23,**
**D-6700 Ludwigshafen (DE)**
Erfinder: **Swoboda, Johann, Dr., Neuwiesenstrasse 28,**
**D-6700 Ludwigshafen (DE)**
Erfinder: **Schmitt, Burghard, Dr., Braeunigstrasse 12,**
**D-6520 Worms 24 (DE)**
Erfinder: **Wassmuth, Georg, Dr.,**
**Von-Sturmfeder-Strasse 60, D-6700 Ludwigshafen (DE)**

# Beschreibung

Die Erfindung betrifft thermoplastische Formmassen auf der Grundlage von gegebenenfalls Styrol/Acrylnitril enthaltenden, mit Acrylester schlagzäh modifizierten Polymerisaten und Polycarbonaten.

Zum Stand der Technik nennen wir:
1. DE-PS 11 70 141
2. DE-PS 18 10 993
3. DE-AS 20 37 419
4. DE-PS 22 59 564
5. Deutsche Patentanmeldung P 31 49 458.0

Mischungen von Styrol/Acrylnitril enthaltenden schlagzähen Polymerisaten mit Polycarbonaten sind in (1) und (2) beschrieben. Diese bekannten Formmassen besitzen im allgemeinen zufriedenstellende Eigenschaften. Häufig wird aber eine höhere Zähigkeit, eine höhere Wärmeformbeständigkeit, vor allem aber eine verbesserte Witterungsbeständigkeit erwartet. In (3) und (4) werden deshalb zur Verbesserung der Beständigkeit gegen Licht und Wärme Formmassen beschrieben, die aus Polycarbonaten und ASA-Polymerisaten aufgebaut sind. Die 2stufige Pfropfung von ASA-Polymerisaten ist in (5) beschrieben. Häufig genügt bei diesen Formmassen die Zähigkeit und Wärmeformbeständigkeit nicht den ständig steigenden Ansprüchen, insbesondere aber ist die Einfärbbarkeit dieser Formmassen und die Verarbeitbarkeit völlig unbefriedigend.

In der DE-OS 20 37 419 sind Formmassen aus Polycarbonat (Komponente B) und harzartigen Polymerisaten A beschrieben. Das harzartige Polymerisat A seinerseits ist aus einem Pfropfmischpolymerisat auf Basis von Polyacrylaten als Kautschukgrundlage a und aus einer Pfropfhülle aus einem Polymerisat b (z. B. S/AN) aufgebaut und enthält ausserdem noch weitere Polymere b (z. B. SAN-Harz). Ausserdem kann die Formmasse (vgl. Seite 7 der Beschreibung) übliche Zusatzstoffe enthalten. Der Anspruch sowie die Ausführungen auf Seite 4, 2. Absatz, der zitierten Entgegenhaltung lassen zwar bei Kenntnis der vorliegenden Anmeldung die ex-post-Interpretation zu, dass der Bestandteil B der bekannten Formmasse durch zweistufige Pfropfung erzielt werden könnte. U.E. ist diese Interpretation aber nicht zutreffend, denn die Beispiele lehren, dass das Polymere B nur auf 2 Arten hergestellt wird. Diese 2 Arten sind:

1. Vorlage des Kautschuks, Zugabe der Monomeren des Polymeren b, d. h. also einer Mischung unter Pfropfung.

2. Vorlage des Kautschuks, Zugabe eines Teils der Monomerenmischung des Polymeren b unter Pfropfung, dann Polymerisation der restlichen Monomeren des Polymeren b in einem getrennten Gefäss zu einem Harz und schliesslich Mischung des Harzes mit dem Pfropfmischpolymerisat.

Die beiläufig in der Beschreibung noch als dritte Möglichkeit auf Seite 4, 2. Absatz, genannte Herstellung ist so zu interpretieren, dass zunächst der Kautschuk gepropft wird und anschliessend zur Herstellung der restliche Teil der Monomeren des Polymeren b in Gegenwart des fertigen Pfropfpolymerisates für sich, ohne zu pfropfen, und in demselben Gefäss „polymerisiert wird".

In der EP-A2-64 692 sind besondere Mischungen aus Polycarbonaten spezifischer Struktur und Pfropfmischpolymerisaten auf Basis von ABS oder ASA beschrieben. Auf Seite 15, Zeilen 11 bis 17, wird zwar angegeben, dass auch als Pfropfgrundlage gepfropfte Kautschuke verwendet werden sollen. Wir interpretieren jedoch in Verbindung mit den Beispielen (vgl. Seite 18, Produkt V) diese Stelle so, dass der Kautschuk zweistufig aufgebaut sein soll. Im Gegensatz zum vorliegenden Stand der Technik werden jedoch beim Anmeldungsgegenstand keine Mischungen aus Polycarbonaten bestimmter Struktur, u. a. der schwer verarbeitbaren tetramethylsubstituierten Polycarbonate vorgeschrieben; ausserdem muss die Pfropfhülle beim Anmeldungsgegenstand obligatorisch in zwei Stufen hergestellt worden sein, und zwar mit der Massnahme, dass zunächst nur das vinylaromatische Monomere z. B. Styrol und/oder $\alpha$-Methylstyrol und danach eine Mischung aus Styrol und/oder $\alpha$-Methylstyrol mit Acrylnitril gepfropft werden.

In der DE-OS 20 37 419 wird eine Formmasse vorgeschlagen, die eine gute Beständigkeit gegen Haarrissbildung und eine gute Wetterbeständigkeit aufweisen soll (vgl. Spalte 2, 2. Absatz). In der EP-A2-64 692 wird als Aufgabe geschildert, die Schlagzähigkeit bei multiaxialer Belastung spezieller Polycarbonatmischungen durch Zusatz von Pfropfmischpolymerisaten auf Basis von ABS bzw. ASA zu verbessern.

Aufgabe der vorliegenden Erfindung war es deshalb, Formmassen auf Basis von Polymermischungen, bestehend aus Polycarbonat, Acrylsäureesterpfropfmischpolymerisaten und gegebenenfalls Styrol/Acrylnitril enthaltenden Copolymerisaten zu entwickeln, die diese Nachteile nicht aufweisen. Insbesondere sollte das Verarbeitungsverhalten im Spritzguss und die Einfärbbarkeit so verbessert werden, dass die Herstellung von Formkörpern mit brillanten, leuchtenden Farben ohne Fliessnahtmarkierungen möglich wird.

Diese Aufgabe wird durch die im Patentanspruch 1 beschriebene Formmasse gelöst.

Die Erfindung betrifft daher eine thermoplastische Formmasse, enthaltend

A) 10 bis 90 Gew.-Teile mindestens eines Polycarbonates auf Basis von 2,2-Bis-(4-hydroxyphenyl)propan, und

B) 90 bis 10 Gew.-Teile mindestens einer Polymerisatmischung bestehend aus

$b_1$) mindestens einem Elastomeren (Kautschuk), das 10 bis 40 Gew.-%, bezogen auf B, ausmacht und aus einer Monomerenmischung aus

— $b_1a_1$) 50 bis 99,9 Gew.-%, bezogen auf $b_1$, von n-Butylacrylat und/oder 2-Ethylhexylacrylat,

— $b_1a_2$) 0 bis 50 Gew.-%, bezogen auf $b_1$, mindestens eines weiteren copolymerisierbaren ungesättigten Monomeren aus der Gruppe von Butadien, Isopren und Vinylmethylether, und

— $b_1a_3$) 0,1 bis 5 Gew.-%, bezogen auf $b_1$, eines copolymerisierbaren polyfunktionellen, vernetzenden Monomeren aus der Gruppe von Diallylmaleat, Diallylfumarat, Diallylphthalat und dem Acrylsäureester des Tricyclodecenylalkohols polymerisiert wird, und

$b_2$) einer Pfropfhülle auf diese Elastomere, die 5 bis 40 Gew.-%, bezogen auf B, ausmacht, und

$b_3$) einer nichtelastomeren Hartkomponente, die 30 bis 85 Gew.-%, bezogen auf B, ausmacht und aus einem Monomerengemisch aus

– $b_3a_1$) 50 bis 90 Gew.-%, bezogen auf $b_3$, mindestens eines monoethylenisch ungesättigten aromatischen Kohlenwasserstoffs mit bis zu 12 Kohlenstoffatomen aus der Gruppe von Styrol, α-Methylstyrol oder deren Mischungen, und

– $b_3a_2$) 10 bis 50 Gew.-%, bezogen auf $b_3$, von Acrylnitril

aufgebaut ist, gegebenenfalls enthaltend

C) übliche Zusatzstoffe,

dadurch gekennzeichnet, dass die Pfropfhülle $b_2$ des Mischpolymerisats B zweistufig aufgebaut ist und als Pfropfmonomere der ersten Stufe

– $b_2a_1$) 20 bis 70 Gew.-%, bezogen auf $b_2$, mindestens eines monoethylenisch ungesättigten aromatischen Kohlenwasserstoffs mit bis zu 12 Kohlenstoffatomen aus der Gruppe von Styrol, α-Methylstyrol, p-Methylstyrol und tert.-Butylstyrol enthält

und als Pfropfmonomere der zweiten Stufe

– $b_2a_2$) 30 bis 80 Gew.-%, bezogen auf $b_2$, eines Gemisches aus mindestens einem monoethylenisch ungesättigten aromatischen Kohlenwasserstoff mit bis zu 12 Kohlenstoffatomen und mindestens einem damit copolymerisierbaren polaren ethylenisch ungesättigten Monomeren aus der Gruppe von Acrylnitril und den (Meth)acrylsäurealkylestern mit 1-4 C-Atomen im Alkylrest im Gewichtsverhältnis von 90:10 bis 60:40 enthält und wobei das aus dem Elastomeren $b_1$ und der Pfropfhülle $b_2$ gebildete Pfropfmischpolymerisat eine mittlere Teilchengrösse von 200 bis 700 nm ($d_{50}$-Wert der integralen Masseverteilung) aufweist.

Nachstehend wird der Aufbau der Formmasse aus den Komponenten A bis C beschrieben:

*Komponente A:*

Unter Polycarbonaten A im Sinne der erfindungsgemässen Formmasse sollen Polycarbonate auf der Basis von 2,2-Bis-(4-hydroxyphenyl)propan verstanden werden. Die Synthese der Polycarbonate wird beispielsweise in der US-PS 2 999 835 und der GB-PS 772 627 beschrieben. Von der Komponente A werden 10 bis 90, insbesondere 30 bis 90 Gew.-Teile, jeweils bezogen auf die Formmasse aus A + B angewendet.

*Komponente B:*

Die Komponente B der Formmasse der vorliegenden Erfindung macht 90 bis 10 Gew.-Teile, vorzugsweise 70 bis 30 Gew.-Teile, bezogen auf die Formmasse aus A und B aus.

Die Komponente B, eine Polymerisatmischung, ist aus insgesamt 3 Teilen aufgebaut. Diese sind:

$b_1$) ein Elastomeres (Kautschuk), das in einem Anteil von 10 bis 40, vorzugsweise von 20 bis 38 Gew.-%, jeweils bezogen auf B vorhanden ist.

Dieses Polymerisat weist eine Einfriertemperatur von weniger als 0°C auf, vorzugsweise von weniger als −30°C,

$b_2$) eine 2stufige Pfropfhülle auf diesem Elastomeren, die 5 bis 40, vorzugsweise 15 bis 30 Gew.-%, jeweils bezogen auf B, ausmacht, und

$b_3$) eine nichtelastomere Hartkomponente, die 30 bis 85, vorzugsweise 40 bis 75 Gew.-%, jeweils bezogen auf B beträgt.

Die Komponente $b_1$ und $b_2$ können auch als Pfropfmischpolymerisat, bzw. Weichkomponente von B bezeichnet werden. Der Bestandteil $b_3$ ist dann als Hartmatrix der Komponente B aufzufassen.

Das Mischpolymerisat B kann somit als aus Weichkomponente ($b_1 + b_2$) und Hartmatrix $b_3$ aufgebaut betrachtet werden.

Als Monomere für die Herstellung des Elastomeren kommen in Betracht:

– $b_1a_1$) 50 bis 99,9, vorzugsweise 70 bis 99 Gew.-%, bezogen auf $b_1$ n-Butylacrylat und/oder 2-Ethylhexylacrylat.

– $b_1a_2$) Gegebenenfalls kann das elastomere Polymerisat $b_1$ auch noch bis zu 50, insbesondere 20 bis 30 Gew.-%, jeweils bezogen auf $b_1$, eines weiteren copolymerisierbaren Monomeren $b_1a_2$, wie Butadien, Isopren, und/oder Vinylmethylether enthalten.

– $b_1a_3$) Um vernetzte Acrylsäureester-Polymerisate zu erhalten, wird die Polymerisation der Acrylsäureester in Gegenwart von 0,1 bis 5, vorzugsweise von 1 bis 4 Gew.-%, bezogen auf die bei der Herstellung der Pfropfgrundlage eingesetzten gesamten Monomeren, eines copolymerisierbaren, polyfunktionellen, vorzugsweise bifunktionellen, die Vernetzung bewirkenden Monomeren $b_1a_3$ durchgeführt. Als solche bi- oder polyfunktionellen Vernetzungsmonomeren $b_1a_3$ eignen sich bestimmte Monomere, die vorzugsweise zwei, gegebenenfalls auch drei, zur Copolymerisation befähigte ethylenische Doppelbindungen enthalten, die nicht in den 1,3-Stellungen konjugiert sind. Geeignete Vernetzungsmonomere sind beispielsweise Diallylmaleat, Diallylfumarat oder Diallylphthalat. Als besonders günstiges Vernetzungsmonomeres hat sich der Acrylsäureester des Tricyclodecenylalkohols erwiesen (vgl. DE-PS 1 260 135).

Die Herstellung der einzusetzenden Weichkomponente ($b_1 + b_2$) kann beispielsweise nach der in der DE-PS 1 260 135 beschriebenen Methode erfolgen.

*Herstellung des Elastomeren $b_1$:*

Das Elastomer, die Pfropfgrundlage $b_1$, wird hergestellt, indem der oder die Acrylsäureester und das polyfunktionelle, die Vernetzung bewirkende Monomere $b_1a_3$ gegebenenfalls zusammen mit den weiteren Comonomeren $b_1a_2$ in wässeriger Emulsion in an und für sich bekannter Weise bei Temperaturen von 20 bis 100, vorzugsweise von 50 bis 80°C, polymerisiert werden. Es können die üblichen Emulgatoren, wie Alkalisalze von Alkyl- oder Alkylarylsulfonsäuren, Alkylsulfate, Fettalkoholsulfonate, Salze höherer Fettsäuren mit 10 bis 30 Kohlenstoffatomen oder Harzseifen, verwendet werden. Vorzugsweise nimmt man die Natriumsalze von Alkylsulfonaten oder Fettsäuren mit 10 bis 18 Kohlenstoffatomen. Es ist günstig, die Emulgatoren in Mengen von 0,5 bis 5, insbesondere von 1 bis 2 Gew.-%, bezogen auf die bei der Herstellung der Pfropfgrundlage $b_1$ eingesetzten Monomeren, einzusetzen. Im allgemeinen wird bei einem Wasser/Monomeren-Verhältnis von 2:1 bis 0,7:1 gearbeitet. Als Polymerisationsinitiatoren dienen insbesondere die gebräuchlichen Persulfate, wie Kaliumpersulfat, es können jedoch auch Redoxsysteme zum Einsatz gelangen. Die Initiatoren werden im allgemeinen in Mengen von 0,1 bis 1 Gew.-%, bezogen auf die bei der Herstellung der Pfropfgrundlage $b_1$ eingesetzten Monomeren, eingesetzt. Als weitere Polymerisationshilfsstoffe können die üblichen Puffersubstanzen, durch welche pH-Werte von vorzugsweise 6 bis 9 eingestellt werden — z. B. Natriumbicarbonat und Natriumpyrophosphat —, sowie 0 bis 3 Gew.-% eines Molekulargewichtsreglers — wie Mercaptane, Terpinole oder dimeres α-Methylstyrol — bei der Polymerisation verwendet werden.

Die genauen Polymerisationsbedingungen, insbesondere Art, Dosierung und Menge des Emulgators, werden innerhalb der oben angegebenen Bereiche im einzelnen so bestimmt, dass der erhaltene Latex des vernetzten Acrylsäureester-Polymerisats einen $d_{50}$-Wert im Bereich von etwa 200 bis 700 nm, vorzugsweise im Bereich von 250 bis 600 nm, besitzt. Die Teilchengrössenverteilung des Latex soll dabei vorzugsweise eng sein. Der Quotient $Q = (d_{90} - d_{10})/d_{50}$ soll kleiner als 0,5, vorzugsweise kleiner als 0,35, sein.

*Herstellung der Pfropfhülle $b_2$:*

Die Pfropfhülle, Komponente $b_2$, ist 2stufig aufgebaut. Die 1. Stufe macht 20 bis 70, vorzugsweise 25 bis 50 Gew.-%, bezogen auf $b_2$, aus. Zu ihrer Herstellung werden nur ethylenisch ungesättigte aromatische Kohlenwasserstoffe mit bis zu 12 C-Atomen $b_2a_1$ verwendet.

Die 2. Stufe der Pfropfhülle macht 30 bis 80, insbesondere 50 bis 75 Gew.-%, jeweils bezogen auf $b_2$, aus. Zu ihrer Herstellung werden Mischungen aus den genannten aromatischen Kohlenwasserstoffen $b_2a_1$ und ethylenisch ungesättigter Monomeren $b_2a_2$ im Gewichtsverhältnis $b_2a_1/b_2a_2$ von 90:10 bis 60:40, insbesondere von 80:20 bis 70:20 angewendet.

Zur Herstellung der Pfropfhülle $b_2$ und damit auch der Weichkomponente $(b_1 + b_2)$ wird in Gegenwart des Latex des vernetzten Acrylesterpolymerisats $b_1$ zuerst mindestens ein vinylaromatisches Monomeres $b_2a_1$ mit bis zu 12 Kohlenstoffatomen polymerisiert. Beispiele für solche Monomere sind Styrol, α-Methylstyrol und kernalkylierte Styrole, wie p-Methylstyrol und tert.-Butylstyrol. Besonders bevorzugt werden Styrol, α-Methylstyrol und p-Methylstyrol eingesetzt. Es ist vorteilhaft, diese Pfropfmischpolymerisation von Styrol $b_2a_1$ auf das als Pfropfgrundlage dienende vernetzte Polyacrylsäureester-Polymerisat $b_1$ in wässeriger Emulsion unter den üblichen, vorstehend aufgeführten Bedingungen durchzuführen. Die Pfropfmischpolymerisation kann zweckmässig im gleichen System erfolgen wie die Emulsionspolymerisation zur Herstellung der Pfropfgrundlage $b_1$, wobei, falls notwendig, weiterer Emulgator und Initiator zugegeben werden kann. Das aufzupropfende vinylaromatische Monomere, insbesondere Styrol, kann dem Reaktionsgemisch auf einmal, absatzweise in mehreren Stufen oder vorzugsweise kontinuierlich während der Polymerisation zugegeben werden. Die Pfropfmischpolymerisation des Styrols in Gegenwart des vernetzten Acrylsäureester-Polymerisats wird so geführt, dass ein Pfropfgrad von 2,5 bis 25, vorzugsweise von 10 bis 20 Gew.-%, im Pfropfmischpolymerisat $(b_1 + b_2)$ resultiert.

In einer zweiten Stufe wird dann die Pfropfmischpolymerisation mit einem Monomerengemisch aus einem vinylaromatischen Monomeren und einem copolymerisierbaren polaren Monomeren durchgeführt $b_2a_2$. Dabei werden bevorzugt die bereits bei der ersten Pfropfstufe eingesetzten Monomeren, insbesondere Styrol, α-Methylstyrol und p-Methylstyrol verwendet. Copolymerisierbare, ethylenisch ungesättigte Monomere sind Acrylnitril, (Meth)-Acrylsäurealkylester mit 1 bis 4 Kohlenstoffatomen im Alkylrest. Besonders bevorzugt werden Acrylnitril, Ethylacrylat, Methylmethacrylat und Gemische aus diesen. Als besonders bevorzugte Monomerengemische werden vor allem Styrol und Acrylnitril, α-Methylstyrol und Acrylnitril und Styrol, Acrylnitril und Methylmethacrylat eingesetzt. Auch der zweite Schritt der Pfropfmischpolymerisation wird zweckmässigerweise im gleichen System durchgeführt, dabei kann, falls notwendig, weiterer Emulgator und Initiator zugegeben werden. Das aufzupfropfende Monomerengemisch, bevorzugt wird eine Mischung aus Styrol und Acrylnitril, kann dem Reaktionsgemisch auf einmal, absatzweise in mehreren Stufen oder vorzugsweise kontinuierlich während der Polymerisation zugegeben werden. Die Pfropfmischpolymerisation des Gemischs von Styrol und Acrylnitril in Gegenwart des vernetzten Acrylsäureester-Polymerisats wird so aufgeführt, dass ein Pfropfgrad von 10 bis 50, vorzugsweise von 20 bis 45 Gew.-%, im Pfropfmischpolymerisat $(b_1 + b_2)$ resultiert. Die Pfropfmischpolymerisate sollen mittlere Teilchengrössen zwischen 200 und 700 nm ($d_{50}$-Wert) besitzen. Die Bedingungen der Pfropfmischpolymerisation sind so zu wählen, dass Teilchengrössen in diesem Bereich resultieren. Massnahmen hierzu sind bekannt und z. B. in der DE-PS 12 60 135 und der DE-OS 28 26 925 sowie in „Journal of Applied Polymer Science", vol. 9 (1965), S. 2929 bis 2938 beschrieben.

Zusätzlich zu dem Pfropfmischpolymerisat $(b_1 + b_2)$ enthält die Komponente B noch eine nichtelastomere Hartkomponente $b_3$ aus einem oder mehreren Copolymerisaten von Styrol und/oder α-Methylstyrol mit Acrylnitril. Der Acrylnitrilgehalt in diesen Copolymerisaten der Hartkomponente $b_3$ soll 10 bis 50, insbesondere 15 bis 40 Gew.-%, vorzugsweise 20 bis 37 Gew.-%, bezogen auf das jeweilige Copolymerisat der Hartkomponente, betragen. Zu dieser Hartkomponente $b_3$ zählen formal auch die bei der Pfropfmischpolymerisation zur Herstellung der Komponente $b_2$ entstehenden freien, nicht gepfropften Styrol/Acrylnitril-Copolymerisate. Je nach den bei der Pfropfmischpolymerisation für die Herstellung des Pfropfmischpolymerisats $(b_1 + b_2)$ gewählten Bedingungen kann es möglich sein, dass bei der Pfropfmischpolymerisation schon ein hinreichender Anteil an Hartkomponente $b_3$ gebildet worden ist. Im allgemeinen wird es jedoch nötig sein, die bei der Pfropfmischpolymerisation erhaltenen Produkte mit zusätzlicher, separat hergestellter Hartkomponente $b_3$ abzumischen.

Bei dieser zusätzlichen, separat hergestellten Hartkomponente $b_3$ kann es sich um ein Styrol/Acrylnitril-Copolymerisat, ein α-Methylstyrol/Acrylnitril-Copolymerisat oder ein α-Methylstyrol/Styrol/Acrylnitril-Terpolymerisat handeln. Diese Copolymerisate können einzeln oder auch in Mischung miteinander für die Hartkomponente eingesetzt werden, so dass es sich bei der zusätzlichen, separat hergestellten Hartkomponente $b_3$ beispielsweise um eine Mischung aus einem Styrol/Acrylnitril-Copolymerisat und einem α-Methylstyrol/Acrylnitril-Copolymerisat handeln kann. In dem Fall, in dem die Hartkomponente $b_3$ aus einer Mischung von einem Styrol/Acrylnitril-Copolymerisat und einem α-Methylstyrol-Acrylnitril-Copolymerisat besteht, soll der Acrylnitril-Gehalt der beiden Copolymerisate tunlichst nicht mehr als 10, vorzugsweise nicht mehr als 5 Gew.-%, bezogen auf das Copolymerisat, voneinander abweichen.

Die Hartkomponente $b_3$ der erfindungsgemässen Massen kann jedoch auch nur aus einem einzigen Styrol/Acrylnitril-Copolymerisat bestehen, nämlich dann, wenn bei der Pfropfmischpolymerisation zur Herstellung der Pfropfhülle Komponente $b_2$, als auch bei der Herstellung der zusätzlichen, separat hergestellten Hartkomponenten von dem gleichen Monomerengemisch aus Styrol und Acrylnitril ausgegangen wird.

Die zusätzliche, separat hergestellte Hartkomponente $b_3$ kann nach den herkömmlichen Methoden erhalten werden. So kann die Copolymerisation des Styrols und/oder α-Methylstyrols mit dem Acrylnitril in Masse, Lösung, Suspension oder wässeriger Emulsion durchgeführt werden. Die Hartkomponente $b_3$ hat vorzugsweise eine Viskositätszahl von 40 bis 100, insbesondere von 50 bis 80. Die Bestimmung der Viskositätszahl erfolgt analog DIN 53 726; dabei werden 0,5 g Material in 100 ml Dimethylformamid gelöst.

*Komponente C:*

Die erfindungsgemässen Formmassen können als weitere Komponente Zusatzstoffe enthalten, wie sie für SAN-Polymerisate und Polycarbonate gebräuchlich sind. Als solche Zusatzstoffe seien beispielsweise genannt: Füllstoffe, weitere Polymere, Farbstoffe, Pigmente, Antistatika, Antioxidantien, Flammschutzmittel und Schmiermittel. Die Zusatzstoffe werden in üblichen Mengen, vorzugsweise in Mengen von 0,1 bis zu insgesamt etwa 30 Gew.-%, bezogen auf die Formmasse aus A + B, eingesetzt.

*Herstellung der Formmasse:*

Das Mischen der Komponenten A, B und C kann nach allen bekannten Methoden erfolgen. Vorzugsweise geschieht jedoch das Mischen der Komponenten A, B und C durch gemeinsames Extrudieren, Kneten oder Verwalzen der Komponenten, wobei die Komponenten notwendigenfalls zuvor aus der bei der Polymerisation erhaltenen Lösung oder aus der wässerigen Dispersion isoliert worden sind. Die in wässeriger Dispersion erhaltenen Produkte der Pfropfmischpolymerisation (Komponente B) können aber auch teilweise entwässert oder direkt als Dispersion mit dem Polycarbonat A, der Hartmatrix $b_3$ und der Komponente C, vermischt werden, wobei dann während des Vermischens die vollständige Trocknung des Pfropfmischpolymerisats erfolgt.

Die Herstellung der Formmassen gemäss Erfindung erfolgt z. B. dadurch, dass eine Schmelze der harten Polymerisate, Komponenten A und $b_3$ mit dem Pfropfmischpolymerisat $(b_1 + b_2)$ bei Temperaturen über 200°C intensiv vermischt wird. Sie kann auch dadurch erfolgen, dass man eine Schmelze der Polymerisate A und $b_3$ mit einem gefällten Pfropfmischpolymerisat $(b_1 + b_2)$, das einen Restwassergehalt von 10 bis 40 Gew.-% aufweist, bei Temperaturen über 180°C intensiv vermischt, oder dass man die Schmelze mit einer Dispersion des Pfropfkautschuks $(b_1 + b_2)$, die einen Feststoffgehalt von 40 bis 70 Gew.-% aufweist, bei Temperaturen über 180°C intensiv vermischt.

Die erfindungsgemässen Formmassen können nach den bekannten Verfahren der Thermoplastverarbeitung bearbeitet werden, also z. B. durch Extrudieren, Spritzgiessen, Kalandrieren, Hohlkörperblasen, Pressen oder Sintern; besonders bevorzugt werden aus den nach dem erfindungsgemässen Verfahren hergestellten Formmassen Formteile durch Spritzgiessen für den Automobilbau hergestellt.

Insbesondere eignen sich die erfindungsgemässen Massen zur Herstellung von farbigen Formteilen bzw. Formkörpern, wie sie insbesondere bei Gartenstühlen, Kinderspielzeug und Hinweisschildern Anwendung finden.

Es hat sich überraschenderweise gezeigt, dass die erfindungsgemässen Massen trotz des relativ grossteiligen Pfropfmischpolymerisats $(b_1 + b_2)$ eine sehr gute Einfärbbarkeit besitzen. Unter Einfärbbarkeit wird dabei die Erzielung brillanter Farbtöne mit möglichst kleinen Pigmentmengen verstanden. Die erfindungsgemässen Massen können daher als Zusatzstoff C, insbesondere Farbstoffe oder Pigmente eingemischt enthalten. Die Farbstoffe oder Pigmente werden der Mischung üblicherweise in Mengen von etwa 0,02 bis etwa 10, vorzugsweise von 0,2 bis 5 Gew.-%, bezogen auf die Formmasse aus A und B, zugesetzt. Als Farbstoffe und Pigmente kommen beispielsweise in Betracht: Cadmiumsulfid, Kupferphthalocyanin, Eisenoxide, feinteilige Russe.

Die aus diesen eingefärbten Massen hergestellten Formkörper zeichnen sich durch einen ausgezeichneten Farbeindruck aus, wobei brillante und leuchtende Farbtöne ohne jede Eintrübung oder Grauschleier erhalten werden können. Die aus den gefärbten Massen durch Spritzguss hergestellten Formkörper besitzen überraschenderweise auch praktisch keine unterschiedliche Farbtönung im Bereich der Angussstelle und der Bindenaht, wie sie in unerwünschter Weise bei der Spritzgussverarbeitung von gefärbten ASA/Polycarbonat-Blends auf Basis von kleinteiligen Pfropfmischpolymerisaten ($b_1 + b_2$) der Komponente B ansonsten in starkem Masse zu beobachten sind. Die im Spritzguss verarbeiteten, gefärbten erfindungsgemässen Massen zeigen hingegen eine gute Farbqualität im Bereich der Angussmarkierung und der Bindenaht. Selbst bei den nicht eingefärbten Formmassen ist eine Bindenahtmarkierung kaum zu erkennen. Die Massen der Erfindung besitzen neben den guten Verarbeitungseigenschaften ausgezeichnete Kerbschlagzähigkeiten.

Es zeigt sich auch, dass die Schlagzähigkeit nach Bewitterung auf einem hohen Endniveau verbleibt und die Formmassen danach trotz Bewitterungsschädigung keinen Bruch aufweisen.

Die in der vorliegenden Anmeldung beschriebenen Parameter wurden wie folgt bestimmt:

1. Die mittlere Teilchengrösse und die Teilchengrössenverteilung wurde aus der integralen Massenverteilung bestimmt. Bei den mittleren Teilchengrössen handelt es sich in allen Fällen um das Gewichtsmittel der Teilchengrössen, wie sie mittels einer analytischen Ultrazentrifuge entsprechend der Methode von W. Scholtan und H. Lange, „Kolloid-Z, und Z.-Polymere", *250* (1972), Seiten 782 bis 796, bestimmt wurden. Die Ultrazentrifugenmessung liefert die integrale Massenverteilung des Teilchendurchmessers einer Probe. Hieraus lässt sich entnehmen, wieviel Gewichtsprozent der Teilchen einen Durchmesser gleich oder kleiner einer bestimmten Grösse haben. Der mittlere Teilchendurchmesser, der auch als $d_{50}$-Wert der integralen Massenverteilung bezeichnet wird, ist dabei als der Teilchendurchmesser definiert, bei dem 50 Gew.-% der Teilchen einen kleineren Durchmesser haben als der Durchmesser, der dem $d_{50}$-Wert entspricht. Ebenso haben dann 50 Gew.-% der Teilchen einen grösseren Durchmesser als der $d_{50}$-Wert. Zur Charakterisierung der Breite der Teilchengrössenverteilung der Kautschukteilchen werden neben dem $d_{50}$-Wert (mittlerer Teilchendurchmesser) die sich aus der integralen Massenverteilung ergebenden $d_{10}$- und $d_{90}$-Werte herangezogen. Der $d_{10}$- bzw. $d_{90}$-Wert der integralen Massenverteilung ist dabei entsprechend dem $d_{50}$-Werte definiert mit dem Unterschied, dass sie auf 10 bzw. 90 Gew.-% der Teilchen bezogen sind. Der Quotient:

$$\frac{d_{90}-d_{10}}{d_{50}} = Q$$

stellt ein Mass für die Verteilungsbreite der Teilchengrösse dar.

2. Die Kerbschlagzähigkeit in [$kJ/m_2$] der Produkte wurde nach DIN 53 453 an bei 250°C gespritzten Normkleinstäben bei 23°C gemessen. Die Schlagzähigkeiten der Versuchsbeispiele sind in der Tabelle zusammengefasst.

3. Die Bewitterungsversuche wurden im Xenotest 1200 an jeweils nicht stabilisiertem Material durchgeführt. Verfolgt wurde die Schlagzähigkeit im Verlauf der Belichtung insbesondere über den durch die UV-Bestrahlung verursachten Steilabfall der Zähigkeit hinaus.

4. Die Viskositätszahlen $\eta$ sp/c in ($cm^3 \cdot g^{-1}$) der Hartkomponente des Pfropfmischpolymerisates $b_3$ wurden an einer 0,5%igen Lösung in Methylethylketon bestimmt. Unlösliche Gelanteile wurden vor der Messung durch Zentrifugieren entfernt und bei der Einwaage des gesamten Polymerisats berücksichtigt.

5. Die Beurteilung der Einfärbbarkeit erfolgt visuell an eingefärbten, durch Spritzguss hergestellten Formkörpern. Zur Einfärbung der Massen wurde dabei in allen Fällen 0,3 Gew.-% an Ultramarinblau verwendet. Die Einfärbbarkeit wurde aufgrund des erhaltenen Farbeindrucks wie folgt benotet:

Note 1: rein, brillant und klar
Note 2: etwas stumpf, leicht verschleiert
Note 3: schmutzig und trübe, stark verschleiert

6. Die Bindenahtmarkierung wurde ebenfalls visuell an im Spritzguss hergestellten Formkörpern, die nicht eingefärbt waren, beurteilt und wie folgt benotet:

Note 1: keine Bindenahtmarkierung
Note 2: Bindenaht gerade zu erkennen
Note 3: starke Bindenaht
Die Erfindung wird durch die nachfolgenden Beispiele näher erläutert. Die in den Beispielen genannten Teile und Prozente beziehen sich, sofern nicht anders angegeben, auf das Gewicht.

Die Beispiele wurden mit den nachfolgenden beschriebenen Produkten durchgeführt.

*Herstellung eines Elastomeren $b_1$:*

1,6 Teile Butylacrylat und 0,04 Teile Tricyclodecenylacrylat wurden in 150 Teilen Wasser unter Zusatz von 0,9 Teilen des Natriumsalzes einer $C_{12}$- bis $C_{18}$-Paraffinsulfonsäure, 0,3 Teilen Kaliumpersulfat, 0,3 Teilen Natriumhydrogencarbonat und 0,15 Teilen Natriumpyrophosphat unter Rühren auf 60°C erwärmt. 5 Minuten nach dem Anspringen der Polymerisationsreaktion wurden innerhalb von 3 Stunden eine Mischung aus 96,4 Teilen Butylacrylat und 1,96 Teilen Tricyclodecenylacrylat sowie eine Lösung von 0,4 Teilen eines $C_{12}$- bis $C_{18}$-Paraffinsulfonsäurenatriumsalzes in 30 Teilchen Wasser zugegeben. Nach Beendigung der Monomerzugabe wurde noch 1 Stunde nachreagieren lassen. Der erhaltene Latex des vernetzten Butylacrylat-Polymerisats hatte einen Feststoffgehalt von 40 Gew.-%. Die mittlere Teilchengrösse (Gewichtsmittel) wurde zu 216 mm ermittelt. Die Teilchengrössenverteilung war eng (Quotient Q = 0,29).

*Herstellung eines Pfropfkautschuks, Komponente $b_1 + b_2$:*

150 Teile des erhaltenen Polybutylacrylatlatex wurden mit 15 Teilen Styrol und 60 Teilen Wasser gemischt und unter Rühren nach Zusatz von weiteren 0,03 Teilen Kaliumpersulfat und 0,05 Teilen Laroylperoxid 3 Stunden auf 65°C erhitzt. Nach Beendigung der ersten Stufe der Pfropfmischpolymerisation hatte das Pfropfmischpolymerisat einen Pfropfgrad von 17%. Diese Pfropfmischpolymerisatdispersion wurde ohne weitere Zusatzstoffe mit 25 Teilen einer Mischung aus Styrol und Acrylnitril (Verhältnis 75:25) weitere 3 Stunden polymerisiert. Das erhaltene Pfropfmischpolymerisat wurde mittels Calciumchloridlösung bei 95°C aus der Dispersion gefällt, mit Wasser gewaschen und im warmen Luftstrom getrocknet. Der Pfropfgrad des Pfropfmischpolymerisats betrug 35%. Die mittlere Teilchengrösse (Gewichtsmittel) wurde zu 215 nm ermittelt. Die Teilchengrössenverteilung war eng (Quotient Q = 0,29).

*Herstellung der nichtelastomeren Hartkomponente $b_3$:*

Ein Monomerengemisch aus Styrol und Acrylnitril wurde unter üblichen Bedingungen in Lösung polymerisiert. Das erhaltene Styrol/Acrylnitril-Copolymerisat hatte einen Acrylnitrilgehalt von 35% und eine Viskositätszahl von 80 ml/g.

Als Komponente A wurde ein Polycarbonat auf der Basis von 2,2-Bis-(4-hydroxyphenyl)propan mit einer relativen Viskosität von 1,32 (gemessen an einer 0,5%igen Lösung in Methylenchlorid) eingesetzt.

*Beispiele 1 bis 3:*

Die in der Tabelle angegebenen Teile der Komponenten A ($b_1 + b_2$) und $b_3$ werden auf einem Mischextruder bei 260°C aufgeschmolzen, gemischt und anschliessend granuliert. Danach werden, jeweils bezogen auf 100 Teile Granulat, 0,3 Teile Ultramarinblau, 2 Teile eines üblichen Schmiermittels auf Basis eines Phthalsäureesters und 0,2 Teile eines sterisch gehinderten Phenols (Antioxydans) zugegeben, die Komponenten gemischt und schonend konfektioniert.

Aus den Mischungen wurden bei 250°C mittels einer Spritzgussmaschine Prüfkörper hergestellt, an denen die in der Tabelle genannten Prüfungen durchgeführt wurden.

*Tabelle*

| Beispiele | Komponente A Teile | Komponente B Aufbau | | | Teile | Kerbschlag-zähigkeit | Einfärb-barkeit | Bindenaht-markierung | Bewitt. nach 150 h |
|---|---|---|---|---|---|---|---|---|---|
| | | $b_1$ | $b_2$ | $b_3$ | | | | | |
| 1 | 40 | 35 | 23 | 42 | 60 | 44 | 1 | keine | kein Bruch |
| 2 | 60 | 40 | 18 | 42 | 40 | 43 | 1 | keine | kein Bruch |
| 3 | 70 | 35 | 23 | 40 | 30 | 46 | 1 | keine | kein Bruch |

## Patentansprüche

1. Thermoplastische Formmasse, enthaltend
A) 10 bis 90 Gew.-Teile mindestens eines Polycarbonates auf Basis von 2,2-Bis-(4-hydroxyphenyl)propan, und
B) 90 bis 10 Gew.-Teile mindestens einer Polymerisatmischung
bestehend aus
$b_1$) mindestens einem Elastomeren (Kautschuk), das 10 bis 40 Gew.-%, bezogen auf B, ausmacht und aus einer Monomerenmischung aus
– $b_1a_1$) 50 bis 99,9 Gew.-%, bezogen auf $b_1$, von n-Butylacrylat und/oder 2-Ethylhexylacrylat,
– $b_1a_2$) 0 bis 50 Gew.-%, bezogen auf $b_1$, mindestens eines weiteren copolymerisierbaren ungesättigten Monomeren aus der Gruppe von Butadien, Isopren und Vinylmethylether, und
– $b_1a_3$) 0,1 bis 5 Gew.-%, bezogen auf $b_1$, eines copolymerisierbaren polyfunktionellen, vernetzenden Monomeren aus der Gruppe von Diallylmaleat, Diallylfumarat, Diallylphthalat und dem Acrylsäureester des Tricyclodecenylalkohols polymerisiert wird, und
$b_2$) einer Pfropfhülle auf diese Elastomere, die 5 bis 40 Gew.-%, bezogen auf B, ausmacht, und
$b_3$) einer nichtelastomeren Hartkomponente, die 30 bis 85 Gew.-%, bezogen auf B, ausmacht und aus einem Monomerengemisch aus
– $b_3a_1$) 50 bis 90 Gew.-%, bezogen auf $b_3$, mindestens eines monoethylenisch ungesättigten aromatischen Kohlenwasserstoffs mit bis zu 12 Kohlenstoffatomen aus der Gruppe von Styrol, α-Methylstyrol oder deren Mischungen, und
– $b_3a_2$) 10 bis 50 Gew.-%, bezogen auf $b_3$, von Acrylnitril
aufgebaut ist,
gegebenenfalls enthaltend
C) übliche Zusatzstoffe,
dadurch gekennzeichnet, dass die Pfropfhülle $b_2$ des Mischpolymerisats B zweistufig aufgebaut ist und als Pfropfmonomere der ersten Stufe
– $b_2a_1$) 20 bis 70 Gew.-%, bezogen auf $b_2$, mindestens eines monoethylenisch ungesättigten aromatischen Kohlenwasserstoffs mit bis zu 12 Kohlenstoffatomen aus der Gruppe von Styrol, α-Methylstyrol, p-Methylstyrol und tert.-Butylstyrol enthält
und als Pfropfmonomere der zweiten Stufe
– $b_2a_2$) 30 bis 80 Gew.-%, bezogen auf $b_2$, eines Gemisches aus mindestens einem monoethylenisch ungesättigten aromatischen Kohlenwasserstoff mit bis zu 12 Kohlenstoffatomen und mindestens einem damit copolymerisierbaren polaren ethylenisch ungesättigten Monomeren aus der Gruppe von Acrylnitril und der (Meth)acrylsäurealkylestern mit 1-4 C-Atomen im Alkylrest im Gewichtsverhältnis von 90:10 bis 60:40 enthält und wobei das aus dem Elastomeren $b_1$ und der Pfropfhülle $b_2$ gebildete Pfropfmischpolymerisat eine mittlere Teilchengrösse von 200 bis 700 nm ($d_{50}$-Wert der integralen Masseverteilung) aufweist.

2. Verwendung der Formmassen gemäss Anspruch 1 zur Herstellung von Formteilen.

3. Formteile aus Formmassen gemäss Anspruch 1.

**Revendications**

1. Masses à mouler thermoplastiques, contenant:

A) 10 à 90 parties en poids d'au moins un polycarbonate à base de 2,2-bis-(4-hydroxyphényl)-propane, et

B) 90 à 10 parties en poids d'au moins un mélange de polymères formé de:

$b_1$) au moins un élastomère (caoutchouc) qui entre pour 10 à 40% en poids dans B et qui est polymérisé à partir de

— $b_1a_1$) 50 à 99,9% en poids, sur la base de $b_1$, d'acrylate de n-butyle et/ou d'acrylate de 2-éthyl-hexyle,

— $b_1a_2$) 0 à 50% en poids, sur la base de $b_1$, d'au moins un autre monomère insaturé copolymérisable choisi dans le groupe du butadiène, de l'isoprène et de l'éther vinylméthylique, et

— $b_1a_3$) 0,1 à 5% en poids, sur la base de $b_1$, d'un monomère réticulant polyfonctionnel copolymérisable, choisi dans le groupe du maléate de diallyle, du fumarate de diallyle, du phtalate de diallyle et de l'ester d'acide acrylique et de l'alcool tricyclodécénylique,

$b_2$) une enveloppe greffée sur cet élastomère, entrant pour 5 à 40% dans le poids de B, et

$b_3$) un composant dur non élastomère, qui entre pour 30 à 85% dans le poids de B et est fait d'un mélange de monomères composé de

— $b_3a_1$) 50 à 90% en poids, sur la base de $b_3$, d'au moins un hydrocarbure aromatique insaturé monoéthyléniquement, comportant jusqu'à 12 atomes de carbone et choisi dans le groupe du styrène, de l'α-méthylstyrène ou de leurs mélanges, et

— $b_3a_2$) 10 à 50% en poids, sur la base de $b_3$, d'acrylonitrile,

et contenant éventuellement

C) des additifs classiques,

caractérisées en ce que l'enveloppe greffée $b_2$ du copolymère B est formée en deux temps et contient, en tant que monomère greffé du premier temps:

— $b_2a_1$) 20 à 70% en poids, sur la base de $b_2$, d'au moins un hydrocarbure aromatique insaturé monoéthyléniquement, comportant jusqu'à 12 atomes de carbone et choisi dans le groupe du styrène, de l'α-méthylstyrène, du p-méthylstyrène et du tert.-butylstyrène, et en tant que monomère greffé du second temps,

— $b_2a_2$) 30 à 80% en poids, sur la base de $b_2$,

d'un mélange d'au moins un hydrocarbure aromatique insaturé monoéthyléniquement, comportant jusqu'à 12 atomes de carbone, et d'au moins un monomère polaire insaturé éthyléniquement, copolymérisable avec cet hydrocarbure et choisi dans le groupe de l'acrylonitrile et des esters alkyliques d'acide (méth)acrylique à 1-4 atomes de C dans le radical alkyle, dans un rapport en poids de 90:10 à 60:40,

le copolymère greffé, formé de l'élastomère $b_1$ et de l'enveloppe greffée $b_2$, présentant une grosseur moyenne de particules de 200 à 700 nm (valeur $d_{50}$ de la distribution de masse intégrale).

2. Utilisation des masses à mouler selon la revendication 1 pour la fabrication de pièces moulées.

3. Pièces moulées faites de masses à mouler selon la revendication 1.

**Claims**

1. A thermoplastic moulding composition containing

(A) from 10 to 90 parts by weight of at least one polycarbonate based on 2,2-bis(4-hydroxyphenyl)propane, and

(B) from 90 to 10 parts by weight of at least one polymer mixture consisting of

(b₁) at least one elastomer (rubber) which accounts for 10 to 40% by weight of B and is polymerized from a monomer mixture of

— (b₁a₁) from 50 to 99.9% by weight, based on $b_1$, of n-butyl acrylate and/or 2-ethylhexyl acrylate,

— (b₁a₂) from 0 to 50% by weight, based on $b_1$, of at least one other copolymerizable unsaturated monomer selected from the group consisting of butadiene, isoprene and vinyl methyl ether, and

— (b₁a₃) from 0.1 to 5% by weight, based on $b_1$, of a copolymerizable, polyfunctional, crosslinking monomer selected from the group consisting of diallyl maleate, diallyl fumarate, diallyl phthalate and the acrylic acid ester of tricyclodecenyl alcohol, and

(b₂) a polymer shell grafted onto this elastomer and accounting for 5 to 40% by weight of B, and

(b₃) a non-elastomeric hard component which accounts for 30 to 85% by weight of B and consists of a monomer mixture of

— (b₃a₁) from 50 to 90% by weight, based on $b_3$, of at least one monoethylenically unsaturated aromatic hydrocarbon of up to 12 carbon atoms selected from the group consisting of styrene, α-methylstyrene and mixtures thereof, and

— (b₃a₂) from 10 to 50% by weight, based on $b_3$, of acrylonitrile,

and optionally containing

(C) conventional additives,

wherein the grafted polymer shell $b_2$ of copolymer B is prepared in two stages and contains, as graft monomer used in the first stage,

— (b₂a₁) from 20 to 70% by weight, based on $b_2$, of at least one monoethylenically unsaturated aromatic hydrocarbon of up to 12 carbon atoms selected from the group consisting of styrene, $\alpha T$-methylstyrene, p-methylstyrene and tert.-butylstyrene, and as graft monomer used in the second stage

— $(b_2a_2)$ from 30 to 80% by weight, based on $b_2$, of a mixture of at least one monoethylenically unsaturated aromatic hydrocarbon of up to 12 carbon atoms with at least one polar ethylenically unsaturated monomer which is copolymerizable therewith and is selected from the group consisting of acrylonitrile and alkyl acrylates and methacrylates, where alkyl is of 1 to 4 carbon atoms, in a weight ratio of from 90:10 to 60:40, the graft copolymer formed from the elastomer $b_1$ and the grafted polymer shell $b_2$ having a mean particle size of from 200 to 700 nm ($d_{50}$ value of the integral mass distribution).

2. The use of a moulding composition as claimed in claim 1 for the production of moulded articles.

3. Moulded articles produced from a moulding composition as claimed in claim 1.